# EUROPEAN PATENT SPECIFICATION

(11) **EP 4 144 265 B1**
(45) Date of publication and mention of the grant of the patent: **28.08.2024**
(21) Application number: 21194304.8
(22) Date of filing: 01.09.2021
(51) Int. Cl.: A47J 36/32, A47J 43/07

(54) **CONTROL UNIT AND METHOD FOR PERFORMING FALLING DOWN PREVENTION OF A KITCHEN APPLIANCE**
STEUERUNGSEINHEIT UND VERFAHREN ZUR DURCHFÜHRUNG VON ABSTURZSICHERUNG EINES KÜCHENGERÄTS
UNITÉ DE COMMANDE ET PROCÉDÉ D'EXÉCUTION DE PRÉVENTION DE CHUTE D'UN APPAREIL DE CUISINE

(43) Date of publication of application: 08.03.2023
(73) Proprietor: BSH Hausgeräte GmbH, 81739 München (DE)
(72) Inventor: Amon, Matej, 3332 Recica ob Savinji (SI); Enci, David, 3331 Nazarje (SI); Mrak, Peter, 2382 Mislinja (SI)

(56) References cited:
- EP-A1- 1 834 559
- EP-A1- 3 530 161
- WO-A1-2018/206949
- DE-A1- 102008 040 743
- KR-A- 20200 093 944

## Description

The present invention relates to a kitchen appliance. In particular, the present invention relates to ensuring that the kitchen appliance is positioned in a stable manner and/or to preventing the kitchen appliance from falling off of a kitchen worktop.

A kitchen appliance may be used with various different tools for performing different processing of a food item which is placed within the receptacle, in particular within the bowl, of the appliance. Example tools are a knife, a shredder, a dough hook, etc. Operation of the appliance may be adapted depending on the tool which is attached to the appliance. DE 10 2008 040 743 A1 describes a cooking appliance which is configured to detect an imbalance of the operation of a tool of the appliance.

Operation of the appliance may cause the appliance to move across the worktop that the appliance is placed on, in particular if the worktop is wet. The present document addresses the technical problem of ensuring a stable positioning of a kitchen appliance on a worktop and/or of preventing a kitchen appliance from falling off of a worktop. The technical problem is solved by each of the independent claims. Preferred examples are described in the dependent claims.

According to an aspect, a control unit for an appliance, in particular for a kitchen and/or cooking appliance, is described. The appliance comprises a plurality of feet for placing the appliance on a worktop. In particular, the appliance may comprise four feet (e.g., at each corner of a base plate of the appliance). The feet may be suction feet configured to apply a suction force to the surface of the worktop, in order to fix the appliance to the worktop.

Furthermore, the appliance comprises a first scale sensor (also referred to as a weight sensor) at a first foot of the plurality of feet. In particular, the appliance may comprise a plurality of scale sensors for the corresponding plurality of feet. A scale sensor may be arranged between the base plate of the appliance and a foot of the appliance.

Each scale sensor may be configured to provide a scale sensor measurement signal, wherein a scale sensor measurement signal comprises a sequence of scale sensor measurement values for a corresponding sequence of time instants. A scale sensor measurement value, which has been measured by a given scale sensor at a given time instant, may be indicative of a force which acts on the given scale sensor at the given time instant. The given scale sensor may be arranged such that the force which acts on the given scale sensor is dependent on the weight of the appliance and/or on a vibration, in particular on an amplitude of a vibration, of the appliance during operation of the appliance.

The appliance typically comprises a motor configured to drive a tool which is attached to the motor. Example tools are a knife, a shredder, a hook, a foaming tool, etc. The motor may be integrated within a base unit of the appliance, wherein the base unit may be configured to be placed on the worktop of a kitchen (via the base plate comprising the plurality of feet).

The appliance may further comprise a receptacle (notably a bowl) configured to take up content (e.g., a food item) that is to be processed within the receptacle using the tool which is attached to and/or driven by the motor. Hence, the tool may be located within the receptacle. The receptacle may be placed on top of the base unit of the appliance.

The vibration of the appliance, which causes the force on the one or more scale sensors, may be due to operation of the motor of the appliance. The vibration may be dependent on the type of the tool and/or on the rotation speed of the motor. Variations of the scale sensor measurement signal that is provided by a scale sensor may be due to the operation of the motor of the appliance. The amplitude and/or the frequency of the variations of the scale sensor measurement signal may be dependent on the type of the tool and/or the rotation speed of the motor.

The control unit is configured to determine a first scale sensor measurement signal of the first scale sensor at the first foot of the appliance. The scale sensor measurement signal may cover a time interval of 1 second or more.

The control unit is further configured to analyze the first scale sensor measurement signal. In particular, a variance of the first scale sensor measurement signal may be determined. Alternatively, or in addition, a deviation of the first scale sensor measurement signal from a nominal value, e.g., an average value, of the first scale sensor measurement signal may be determined.

Furthermore, the control unit is configured to, in dependence of the analyzing, perform a safety measure directed at preventing the appliance from moving across the worktop and/or from falling-off of the worktop. In particular, the control unit may be configured to analyze the first scale sensor measurement signal, in order to determine whether or not the first foot is at least temporarily out of contact with (i.e., not touching) the worktop (such that the appliance may move along the worktop). Furthermore, the control unit may be configured to perform the safety measure, if, in particular only if, it is determined that the first foot is at least temporarily out of contact with (i.e., not touching) the worktop.

The safety measure may comprise stopping operation of the appliance, in particular of the motor of the appliance. Alternatively, or in addition, the safety measure may comprise outputting a warning, in particular an acoustic warning, to a user of the appliance.

Hence, a control unit is described which is configured to analyze the scale sensor measurement signal of at least one scale sensor of the appliance, in order to prevent the appliance from moving along and/or from falling off of the worktop in an efficient and reliable manner (while not substantially limiting operation of the appliance).

The control unit may be configured to determine whether the motor is activated or not. The safety measure may be performed if, in particular only if, it is determined that the motor is activated. By doing this, the comfort-of-use of the appliance may be improved.

The control unit may be configured to determine an operational parameter, in particular a rotation speed of the motor and/or a type of the tool which is driven by the motor, of the appliance. The first scale sensor measurement signal may be analyzed in dependence of the operational parameter of the appliance, thereby increasing the reliability of detecting a critical situation which may lead to the appliance moving along and/or falling off of the worktop.

The control unit may be configured to determine whether or not the first scale sensor measurement signal is substantially constant at a nominal value for at least a minimum temporal duration (e.g., of 1 second or more, or of 5 seconds or more). By way of example, it may be determined that the variance of the first scale sensor measurement signal is smaller than a pre-determined threshold value. It may be determined that the first foot has slipped off of the edge of the worktop, if it is determined that the first scale sensor measurement signal is substantially constant at the nominal value for at least the minimum temporal duration. In reaction to this, the safety measure may be performed. By doing this, the safety of the appliance may be increased further.

The control unit may be configured to determine the nominal value of the first scale sensor measurement signal, in particular based on the average of the scale sensor measurement values of the first scale sensor measurement signal. The nominal value may be compared with a reference value, wherein the reference value may be dependent on the weight of the appliance.

The control unit may be configured to determine, based on the comparison, whether or not the first foot has slipped off of the edge of the worktop. In particular, if the nominal value differs from the reference value by more than a pre-determined difference, it may be determined that the first foot has slipped off of the edge of the worktop. The safety measure may be performed, if, in particular only if, it is determined that the first foot has slipped off of the edge of the worktop. By doing this, the safety of the appliance may be increased further.

The control unit may be configured to determine a plurality of scale sensor measurement signals of the scale sensors at the corresponding plurality of feet. The plurality of scale sensor measurement signals may comprise respective scale sensor measurement values for the same sequence of time instants. It may then be determined in a particularly reliable manner based on the plurality of scale sensor measurement signals, whether or not the first foot is at least temporarily out of contact with the worktop.

In particular, the control unit may be configured to compare the first scale sensor measurement signal with the other one or more scale sensor measurement signals from the plurality of scale sensor measurement signals. It may then be determined based on the comparison, in particular based on a deviation of the first scale sensor measurement signal from the other one or more scale sensor measurement signals, whether or not the first foot is at least temporarily out of contact with the worktop.

The control unit may be configured to determine a deviation of the first scale sensor measurement signal from the nominal value, in particular a deviation having a polarity which corresponds to an upward movement of the appliance with respect to the worktop. It may then be determined in a particularly reliable manner based on the deviation, whether or not the first foot is at least temporarily out of contact with the worktop.

The control unit may be configured to determine a variance of the first scale sensor measurement signal relative to the nominal value. It may then be determined in a particularly reliable manner based on the variance, whether or not the first foot is at least temporarily out of contact with the worktop.

The first foot (in particular, each one of the plurality of feet) may be a suction foot which exhibits a maximum suction force for attaching the appliance to the worktop (in case the worktop and the first foot are dry and clean). The control unit may be configured to determine, based on the first scale sensor measurement signal, in particular based on a deviation of the first scale sensor measurement signal from the nominal value, whether or not the actual suction force of the first foot is reduced with regards to the maximum suction force. The safety measure may be performed, if it is determined that the actual suction force of the first foot is reduced with regards to the maximum suction force. By doing this, the safety of the appliance may be increased in an efficient and reliable manner.

According to a further aspect, an appliance is described. The appliance comprises a plurality of feet for placing the appliance on a worktop, and at least one scale sensor for at least one of the plurality of feet. Furthermore, the appliance comprises a control unit as described within the present document, which is configured to perform one or more safety measures directed at preventing the appliance from moving across the worktop and/or from falling-off of the worktop.

According to another aspect, a method for operating an appliance is described. The appliance comprises a plurality of feet for placing the appliance on a worktop, and a first scale sensor at a first foot of the plurality of feet. The method comprises determining a first scale sensor measurement signal of the first scale sensor at the first foot of the appliance. In addition, the method comprises analyzing the first scale sensor measurement signal, and in dependence of the analyzing, performing a safety measure directed at preventing the appliance from moving across the worktop and/or from falling-off of the worktop.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1a: shows a block diagram of a kitchen appliance, in particular of a cooking processor;
- Figure 1b: shows a perspective view of a kitchen appliance;
- Figure 2a: shows a side view of an example scale sensor holder of a kitchen appliance;
- Figure 2b: shows a bottom view of an example scale sensor holder;
- Figures 3a and 3b: show different scale sensor measurement signals; and
- Figure 4: shows a flow chart of an example method for monitoring the stable positioning of a kitchen appliance.

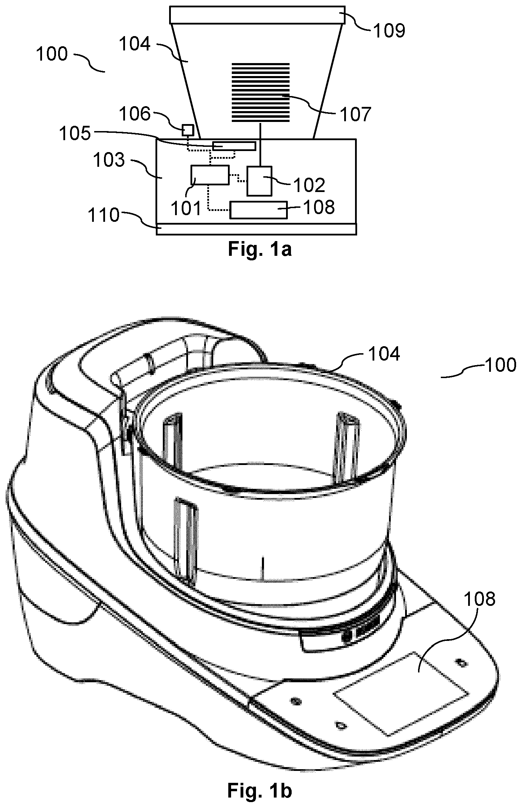

As outlined above, the present document is directed at ensuring a stable positioning of a kitchen appliance on a worktop in an efficient manner. In this context, Fig. 1a shows a block diagram of an example appliance 100 which comprises a base unit 103 on which a receptacle 104, in particular a bowl, is placed. The receptacle 104 may be configured to be covered by a lid 109. The base unit 103 comprises a motor 102 which is configured to drive a tool 107 which is located within the receptable 104. The tool 107 may be detachable and/or exchangeable. In particular, the appliance 100 may be configured to be used with an arbitrary tool 107 out of a pre-determined set of K different tools 107.

The appliance 100 may comprise a heating unit 106 (which may alternatively, or in addition, be integrated into the receptacle 104) for heating the receptacle 104, e.g., for allowing a food item to be cooked within the receptacle 104. Furthermore, the appliance 100 may comprise a temperature sensor 105 which is configured to provide sensor data regarding the temperature of the food item within the receptacle 104. In addition, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as WLAN. A control unit 101 of the appliance 100 may be configured to operate the appliance 100, in particular the motor 102 and/or the heating unit 106, in dependence of a user input received via the user interface 108 (of the appliance 100 or of a remote device).

Fig. 1b shows a perspective view of an exemplary appliance 100.

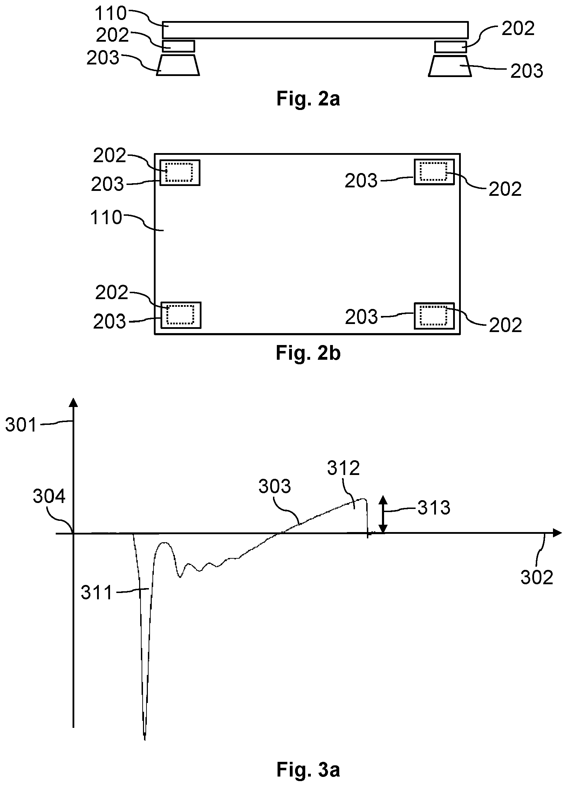

The appliance 100 may further comprise a base plate 110 (also referred to as a scale sensor holder) for placing the appliance 100 onto a ground, in particular onto a worktop. The base plate 110 may be positioned at the bottom of the base unit 103 (as illustrated in Fig. 1a). The base plate 110 typically comprises a plurality of feet 203, in particular suction feet, wherein the feet 203 are configured to be in contact with the ground that the appliance 100 is placed on (as illustrated in Figs. 2a and 2b). In particular, the base plate 110 may comprise four feet 203 at corresponding four corners of the base plate 110.

A foot 203, in particular each foot 203, may be coupled to the base plate 110 via a scale sensor 202, wherein the scale sensor 202 is configured to provide scale sensor measurement data regarding the weight which is carried by the scale sensor 202. The appliance 100, in particular the base plate 110, may comprise a plurality of different scale sensors 202 at a corresponding plurality of feet 203.

The control unit 101 of the appliance 100 may be configured to determine the weight of the one or more food items within the receptacle 104 based on the scale sensor measurement data provided by the plurality of scale sensors 202.

Hence, a kitchen appliance 100, in particular a cook processor, is described, which comprises one or more built-in scale modules or sensors 202 that are integrated into a bottom scale sensor holder 110 with suction feet 203, wherein the suction feet 203 are configured to fix the appliance 100 to a worktop.

The suction feet 203 are typically designed to provide stability to the appliance 100, even when vibrations occur during processing foodstuff within the receptacle 104, e.g., when kneading dough at a certain rotating speed. In this context, the suction force of the suction feet 203 is typically sufficiently high to maintain the appliance 100 stable in case of vibrations at a given strength and/or with a given amplitude. On the other hand, the suction feet 203 typically exhibit a maximum pull-out or suction force (for detaching a suction foot 203 from the worktop), wherein the actual suction force of a suction foot 203 typically depends on the type of surface of the worktop and/or on the cleanliness of the bottom face of the suction foot 203 and/or of the surface of the worktop. In case of a relatively dirty surface of a suction foot 203 and/or of the worktop, the actual suction force is typically relatively low. In particular, the actual suction force of a suction foot 203 may be lower than the strength of the vibrations during operation of the appliance 100. As a result of this, during operation of the appliance 100, the suction foot 203 may be detached from the surface of the worktop such that the appliance 100 may move along the surface of the worktop. Eventually this may cause the appliance 100 to fall off of the worktop. The risk of a moving appliance 100 and/or the risk of falling off of the worktop may be dependent on the frequency of the vibration of the appliance 100.

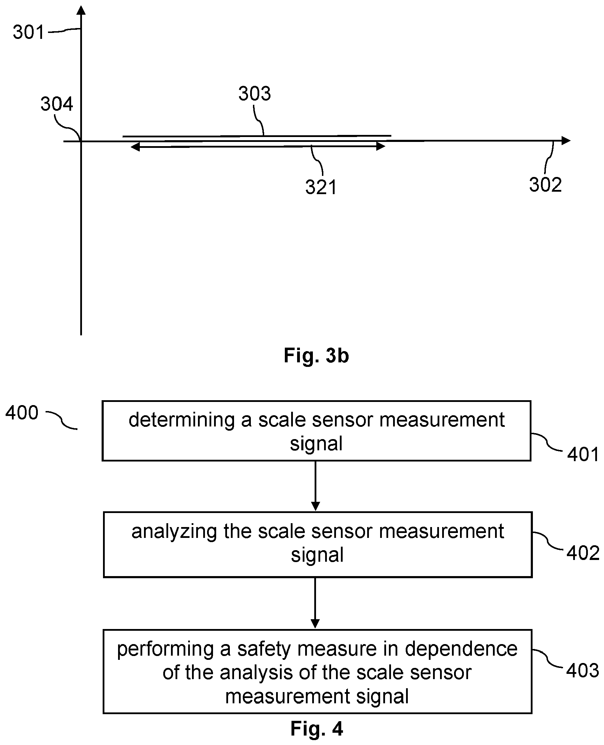

The scale sensor 202 at a foot 203 of the appliance 100 may be configured to determine a scale sensor measurement signal 303 (as illustrated in Figs. 3a and 3b), wherein the scale sensor measurement signal 303 may comprise a sequence of scale sensor measurement values 301 for a corresponding sequence of time instants. In other words, the scale sensor measurement signal 303 may indicate scale sensor measurement values 301 as a function of time 302.

Fig. 3a shows a situation, where the foot 203 of the appliance 100 is in contact with the worktop but where the actual suction force 313 of the foot 203 is lower than the strength of the vibrations of the appliance 100. In particular, the scale sensor measurement signal 303 shown in Fig. 3a shows the deviation of the scale sensor measurement value 301 from a nominal value 304, wherein the nominal value 304 may be a value measured by the scale sensor 202 when the scale sensor 202 is floating (e.g., when the appliance 100 is held in the air) or when the foot 203 of the scale sensor 202 is positioned on the worktop (without vibrations of the appliance 100).

The scale sensor measurement signal 303 of Fig. 3a comprises a first section 311 with a peak of the scale sensor measurement values 301 with a first polarity. This peak may be due to the appliance 100, and in particular the foot 203, at which the scale sensor 202 is positioned, being pushed towards the worktop. Furthermore, the scale sensor signal 303 of Fig. 3a comprises a second section 312 with a peak of the scale sensor measurement values 301 with a second polarity. This peak may be due to the appliance 100, and in particular the foot 203, being lifted off of the worktop.

The control unit 101 of the appliance 100 may be configured to detect a critical situation, where the appliance 100 is moving on the worktop and/or where the appliance 100 is at risk of falling off of the worktop. A critical situation may be detected based on the scale sensor measurement signal 303 provided by one or more scale sensors 202 of the appliance 100. Furthermore, the control unit 101 may take into account information regarding the operation of the motor 102, the type of the tool 107 which is being used and/or the weight of the food item within the receptable 104. Based on this information the extent, in particular the strength, of the vibrations of the appliance 100 may be predicted.

When the appliance 100 is moving along the surface of the worktop, then the pull-out and/or suction forces 313 of the suction feet 203 are lower than in a situation, where the suction feet 203 are sucked to the surface of the worktop. When a suction foot 203 does not have a suction effect, the scale sensor measurement values 301 of the scale sensor 202 are close to the nominal value 304, when the suction foot 203 (and by consequence the appliance 100) is lifted up. Hence, the pull-out force 313 exhibits a floating value (close to the nominal value 304). Consequently, the control unit 101 may be configured to analyze the scale sensor measurement signal 303 of a suction foot 203, in particular the peaks 312 of the scale sensor measurement signal 303, in order to determine whether or not the suction foot 203 is maintaining the appliance 100 in a fixed position, and/or whether or not the appliance 100 is moving across the worktop.

Alternatively, or in addition, the control unit 101 may be configured to detect a situation where a suction foot 203 is not in contact with the worktop, in particular where the suction foot 203 is positioned over the edge of the worktop. If one of the suction feet 203 slips over the edge of the worktop, then the scale sensor measurement signal 303 for this suction foot 203 corresponds (substantially constantly) to the nominal value 304, e.g., for at least a pre-determined minimum duration 321 (as illustrated in Fig. 3b). The control unit 101 may be configured to detect that one of the suction feet 203 exhibits a scale sensor measurement signal 303 which corresponds to the nominal value 304 (as illustrated in Fig. 3b), whereas the one or more other suction feet 203 exhibit scale sensor measurement signals 303 which vary around the nominal value 304 (as illustrated in Fig. 3b). Based on this information, it may be concluded that the identified suction foot 203 has slipped over the edge of the worktop.

If a critical situation is detected, a safety measure may be performed. In particular, operation of the appliance 100, in particular of the motor 102 of the appliance 100, may be stopped. Alternative, or in addition, a (acoustic) warning may be generated (via the user interface 108). By doing this, damage of the appliance 100 may be avoided in an efficient and reliable manner. In particular, it may be avoided that the appliance 100 falls off of the worktop that the appliance 100 is standing on.

Hence, the control unit 101 of the appliance 100 may be configured to determine the scale sensor measurement signal 303 of the scale sensor 202 of at least one foot 203 of the appliance 100. The deviation 313 of the scale sensor measurement values 301 from the nominal value 304 may be determined. Alternatively, or in addition, the variance of the scale sensor measurement values 301 of the scale sensor measurement signal 303 may be determined.

Furthermore, the control unit 101 may be configured to detect a critical situation based on the scale sensor measurement signal 303, in particular based on the deviation 313 and/or based on the variance. In addition, the control unit 101 may be configured to execute a safety measure for protecting the appliance 100, if a critical situation has been detected.

Fig. 4 shows a flow chart of an example (computer-implemented) method 400 for operating an appliance 100, in particular a kitchen and/or cooking appliance. The appliance 100 comprises a plurality of feet 203 for placing the appliance 100 on a worktop. Furthermore, the appliance 100 comprises a first scale sensor 202 for a first foot 203 of the plurality of feet 203. In particular, the appliance 100 may comprise a plurality of scale sensors 202 for the corresponding plurality of feet 203.

The method 400 comprises determining 401 a first scale sensor measurement signal 303 of the first scale sensor 202 at the first foot 203 of the appliance 100. The first scale sensor measurement signal 303 may comprise a sequence of scale sensor measurement values 301 for a corresponding sequence of time instants 302. A scale sensor measurement value 301 for a time instant 302 may be indicative of the force acting on the first scale sensor 202 at the time instant 302 (in particular the force which is acting in the direction perpendicular to the surface of the worktop).

The method 400 further comprises analyzing 402 the first scale sensor measurement signal 303. In particular, the evolution of the first scale sensor measurement signal 303 along the time 302 may be analyzed. Alternatively, or in addition, the deviation 313 of the first scale sensor measurement signal 303 from a nominal value 304 may be determined.

Furthermore, the method 400 comprises, in dependence of the analyzing 402, performing 403 a safety measure directed at preventing the appliance 100 from moving across the worktop and/or from falling-off of the worktop. By way of example, operation of the appliance 100 may be stopped and/or a warning may be output (via the user interface 108).

Hence a scheme is described which allows predicting critical vibrations of an appliance 100 during processing of the appliance 100. If such critical vibrations are detected, a safety reaction may be performed, thereby preventing the appliance 100 from falling off of the worktop that the appliance 100 is standing on.

It should be noted that the description and drawings merely illustrate the principles of the proposed methods and systems. Furthermore, all examples and embodiment outlined in the present document are principally intended expressly to be only for explanatory purposes to help the reader in understanding the principles of the proposed methods and systems.

## Claims

1. An appliance (100), wherein the appliance (100) comprises,
- a plurality of feet (203) for placing the appliance (100) on a worktop;
- at least one scale sensor (202) for at least one of the plurality of feet (203); and
- a control unit (101); wherein the control unit (101) is configured to
- determine a first scale sensor measurement signal (303) of the first scale sensor (202) at the first foot (203) of the appliance (100); wherein the first scale sensor measurement signal (303) comprises a sequence of scale sensor measurement values (301) for a corresponding sequence of time instants (302); wherein a scale sensor measurement value (301) for a time instant (302) is indicative of a force acting on the first scale sensor (202) at the time instant (302); and
- analyze the first scale sensor measurement signal (303); and
- in dependence of the analyzing, perform a safety measure directed at preventing the appliance (100) from falling-off of the worktop; the appliance (100) being **characterized in that** the control unit (101) is configured to
- determine, based on the first scale sensor measurement signal (303), whether or not the first foot (203) is at least temporarily out of contact with the worktop; and
- perform the safety measure, if it is determined that the first foot (203) is at least temporarily out of contact with the worktop.

2. The appliance (100) of claim 1, wherein the control unit (101) is configured to
- perform the safety measure, only if it is determined that the first foot (203) is at least temporarily out of contact with the worktop.

3. The appliance (100) of any previous claim, wherein the control unit (101) is configured to
- determine whether or not the first scale sensor measurement signal (303) is substantially constant at a nominal value (304) for at least a minimum temporal duration (321); and
- determine that the first foot (203) has slipped off of an edge of the worktop, if it is determined that the first scale sensor measurement signal (303) is substantially constant at the nominal value (304) for at least the minimum temporal duration (321); and
- in reaction to this, perform the safety measure.

4. The appliance (100) of any previous claim, wherein the control unit (101) is configured to
- determine a nominal value (304) of the first scale sensor measurement signal (303), in particular based on an average of the scale sensor measurement values (301) of the first scale sensor measurement signal (303);
- compare the nominal value (304) with a reference value; wherein the reference value is in particular dependent on a weight of the appliance (100);
- determine, based on the comparison, whether or not the first foot (203) has slipped off of an edge of the worktop; and
- perform the safety measure, if it is determined that the first foot (203) has slipped off of the edge of the worktop.

5. The appliance (100) of any previous claim, wherein the appliance (100) comprises a plurality of scale sensors (202) for the corresponding plurality of feet (203); and wherein the control unit (101) is configured to
- determine a plurality of scale sensor measurement signals (303) of the scale sensors (202) at the corresponding plurality of feet (203); wherein the plurality of scale sensor measurement signals (303) comprises respective scale sensor measurement values (301) for the same sequence of time instants (302); and
- determine, based on the plurality of scale sensor measurement signals (303), whether or not the first foot (203) is at least temporarily out of contact with the worktop.

6. The appliance (100) of claim 5, wherein the control unit (101) is configured to
- compare the first scale sensor measurement signal (303) with the other one or more scale sensor measurement signals (303) from the plurality of scale sensor measurement signals (303); and
- determine, based on the comparison, in particular based on a deviation of the first scale sensor measurement signal (303) from the other one or more scale sensor measurement signals (303), whether or not the first foot (203) is at least temporarily out of contact with the worktop.

7. The appliance (100) of any previous claim, wherein the control unit (101) is configured to
- determine a deviation (313) of the first scale sensor measurement signal (303) from a nominal value (304), in particular a deviation (313) having a polarity which corresponds to an upward movement of the appliance (100) with respect to the worktop; and
- determine, based on the deviation (313), whether or not the first foot (203) is at least temporarily out of contact with the worktop.

8. The appliance (100) of any previous claim, wherein the control unit (101) is configured to
- determine a variance of the first scale sensor measurement signal (303) relative to a nominal value (304); and
- determine, based on the variance, whether or not the first foot (203) is at least temporarily out of contact with the worktop.

9. The appliance (100) of any previous claim, wherein
- the appliance (100) comprises a motor (102) which is configured to drive a tool (107) within a receptacle (104) of the appliance (100); and
- the control unit (101) is configured to
- determine whether the motor (102) is activated or not; and
- perform the safety measure if, in particular only if, it is determined that the motor (102) is activated.

10. The appliance (100) of claim 9, wherein the control unit (101) is configured to
- determine an operational parameter, in particular a rotation speed of the motor (102) and/or a type of the tool (107) which is driven by the motor (102), of the appliance (100); and
- analyze the first scale sensor measurement signal (303) in dependence of the operational parameter of the appliance (100).

11. The appliance (100) of any previous claim, wherein the safety measure comprises
- stopping operation of the appliance (100), in particular of a motor (102) of the appliance (100); and/or
- outputting a warning, in particular an acoustic warning, to a user of the appliance (100).

12. The appliance (100) of any previous claim, wherein
- the first foot (203) is a suction foot which exhibits a maximum suction force for attaching the appliance (100) to the worktop; and
- the control unit (101) is configured to
- determine, based on the first scale sensor measurement signal (303), in particular based on a deviation (313) of the first scale sensor measurement signal (303) from a nominal value (304), whether or not an actual suction force of the first foot (203) is reduced with regards to the maximum suction force; and
- perform the safety measure if it is determined that the actual suction force of the first foot (203) is reduced with regards to the maximum suction force.

13. The appliance (100) of any previous claim, wherein the first scale sensor (202) is arranged such that the force acting on the first scale sensor (202) is dependent on
- a weight of the appliance (100); and/or
a vibration, in particular an amplitude of a vibration, of the appliance (100) during operation of the appliance (100).

14. A method (400) for operating an appliance (100); wherein the appliance (100) comprises a plurality of feet (203) for placing the appliance (100) on a worktop; and wherein the appliance (100) comprises a first scale sensor (202) at a first foot (203) of the plurality of feet (203); wherein the method (400) comprises,
- determining (401) a first scale sensor measurement signal (303) of the first scale sensor (202) at the first foot (203) of the appliance (100); wherein the first scale sensor measurement signal (303) comprises a sequence of scale sensor measurement values (301) for a corresponding sequence of time instants (302); wherein a scale sensor measurement value (301) for a time instant (302) is indicative of a force acting on the first scale sensor (202) at the time instant (302); and
- analyzing (402) the first scale sensor measurement signal (303); and
- in dependence of the analyzing (402), performing (403) a safety measure directed at preventing the appliance (100) from moving across the worktop and/or from falling-off of the worktop; and
- determining, based on the first scale sensor measurement signal (303), whether or not the first foot (203) is at least temporarily out of contact with the worktop; and
- performing the safety measure, if it is determined that the first foot (203) is at least temporarily out of contact with the worktop.

15. A software program which is adapted for execution on a processor and for performing the method steps of the method (400) according to claim 14.

## Patentansprüche

1. Gerät (100), das Folgendes umfasst:
- mehrere Füße (203) für das Hinstellen des Geräts (100) auf eine Arbeitsplatte,
- mindestens einen Wägesensor (202) für mindestens einen der mehreren Füße (203) und
- eine Steuereinheit (101), wobei die Steuereinheit (101) so konfiguriert ist, dass sie:
- ein erstes Wägesensormesssignal (303) des ersten Wägesensors (202) an dem ersten Fuß (203) des Geräts (100) ermittelt, wobei das erste Wägesensormesssignal (303) eine Abfolge von Wägesensormesswerten (301) für eine entsprechende Abfolge von Zeitpunkten (302) umfasst, wobei ein Wägesensormesswert (301) für einen Zeitpunkt (302) eine Kraft anzeigt, die zu dem Zeitpunkt (302) auf den ersten Wägesensor (202) einwirkt, und
- das erste Wägesensormesssignal (303) analysiert und
- in Abhängigkeit von der Analyse eine Sicherheitsmaßnahme durchführt, die darauf abzielt zu verhindern, dass das Gerät (100) von der Arbeitsplatte herunterfällt,
wobei das Gerät (100) **dadurch gekennzeichnet ist, dass** die Steuereinheit (101) so konfiguriert ist, dass sie:
- auf der Grundlage des ersten Wägesensormesssignals (303) ermittelt, ob der erste Fuß (203) zumindest zeitweise keinen Kontakt mit der Arbeitsplatte hat, und
- die Sicherheitsmaßnahme durchführt, wenn ermittelt wird, dass der erste Fuß (203) zumindest zeitweise keinen Kontakt mit der Arbeitsplatte hat.

2. Gerät (100) nach Anspruch 1, wobei die Steuereinheit (101) so konfiguriert ist, dass sie:
- die Sicherheitsmaßnahme nur dann durchführt, wenn ermittelt wird, dass der erste Fuß (203) zumindest zeitweise keinen Kontakt mit der Arbeitsplatte hat.

3. Gerät (100) nach einem der vorhergehenden Ansprüche, wobei die Steuereinheit (101) so konfiguriert ist, dass sie:
- ermittelt, ob das erste Wägesensormesssignal (303) zumindest für eine Mindestzeitdauer (321) im Wesentlichen konstant bei einem Nennwert (304) liegt, und
- ermittelt, dass der erste Fuß (203) von einer Kante der Arbeitsplatte abgerutscht ist, wenn ermittelt wird, dass das erste Wägesensormesssignal (303) zumindest für die Mindestzeitdauer (321) im Wesentlichen konstant bei dem Nennwert (304) liegt, und
- als Reaktion darauf die Sicherheitsmaßnahme durchführt.

4. Gerät (100) nach einem der vorhergehenden Ansprüche, wobei die Steuereinheit (101) so konfiguriert ist, dass sie:
- insbesondere auf der Grundlage eines Durchschnitts der Wägesensormesswerte (301) im ersten Wägesensormesssignal (303) einen Nennwert (304) des ersten Wägesensormesssignals (303) ermittelt,
- den Nennwert (304) mit einem Referenzwert vergleicht, wobei der Referenzwert insbesondere von einem Gewicht des Geräts (100) abhängig ist,
- auf der Grundlage des Vergleichs ermittelt, ob der erste Fuß (203) von einer Kante der Arbeitsplatte abgerutscht ist, und
- die Sicherheitsmaßnahme durchführt, wenn ermittelt wird, dass der erste Fuß (203) von der Kante der Arbeitsplatte abgerutscht ist.

5. Gerät (100) nach einem der vorhergehenden Ansprüche, wobei das Gerät (100) mehrere Wägesensoren (202) für die entsprechenden mehreren Füße (203) umfasst und die Steuereinheit (101) so konfiguriert ist, dass sie:
- mehrere Wägesensormesssignale (303) der Wägesensoren (202) an den entsprechenden mehreren Füßen (203) ermittelt, wobei die mehreren Wägesensormesssignale (303) jeweilige Wägesensormesswerte (301) für die gleiche Abfolge von Zeitpunkten (302) umfasst, und
- auf der Grundlage der mehreren Wägesensormesssignale (303) ermittelt, ob der erste Fuß (203) zumindest zeitweise keinen Kontakt mit der Arbeitsplatte hat.

6. Gerät (100) nach Anspruch 5, wobei die Steuereinheit (101) so konfiguriert ist, dass sie:
- das erste Wägesensormesssignal (303) mit dem einen oder den mehreren anderen Wägesensormesssignalen (303) unter den mehreren Wägesensormesssignalen (303) vergleicht und
- auf der Grundlage des Vergleichs, insbesondere einer Abweichung des ersten Wägesensormesssignals (303) von dem einen oder den mehreren anderen Wägesensormesssignalen (303), ermittelt, ob der erste Fuß (203) zumindest zeitweise keinen Kontakt mit der Arbeitsplatte hat.

7. Gerät (100) nach einem der vorhergehenden Ansprüche, wobei die Steuereinheit (101) so konfiguriert ist, dass sie:
- eine Abweichung (313) des ersten Wägesensormesssignals (303) von einem Nennwert (304), insbesondere eine Abweichung (313) mit einem Vorzeichen ermittelt, das einer Bewegung des Geräts (100) nach oben in Bezug auf die Arbeitsplatte entspricht, und
- auf der Grundlage der Abweichung (313) ermittelt, ob der erste Fuß (203) zumindest zeitweise keinen Kontakt mit der Arbeitsplatte hat.

8. Gerät (100) nach einem der vorhergehenden Ansprüche, wobei die Steuereinheit (101) so konfiguriert ist, dass sie:
- eine Varianz des ersten Wägesensormesssignals (303) in Bezug auf einen Nennwert (304) ermittelt und
- auf der Grundlage der Varianz ermittelt, ob der erste Fuß (203) zumindest zeitweise keinen Kontakt mit der Arbeitsplatte hat.

9. Gerät (100) nach einem der vorhergehenden Ansprüche, wobei
- das Gerät (100) einen Motor (102) umfasst, der so konfiguriert ist, dass er ein Werkzeug (107) in einem Gefäß (104) des Geräts (100) antreibt, und
- die Steuereinheit (101) so konfiguriert ist, dass sie:
- ermittelt, ob der Motor (102) eingeschaltet ist, und
- die Sicherheitsmaßnahme dann, insbesondere nur dann durchführt, wenn ermittelt wird, dass der Motor (102) eingeschaltet ist.

10. Gerät (100) nach Anspruch 9, wobei die Steuereinheit (101) so konfiguriert ist, dass sie:
- einen Betriebsparameter des Geräts (100), insbesondere eine Drehzahl des Motors (102) und/oder eine Art des von dem Motor (102) angetriebenen Werkzeugs (107) ermittelt, und
- das erste Wägesensormesssignal (303) in Abhängigkeit von dem Betriebsparameter des Geräts (100) analysiert.

11. Gerät (100) nach einem der vorhergehenden Ansprüche, wobei die Sicherheitsmaßnahme Folgendes umfasst:
- Einstellen des Betriebs des Geräts (100), insbesondere eines Motors (102) des Geräts (100) und/oder
- Ausgeben einer Warnmeldung, insbesondere einer akustischen Warnmeldung, für einen Benutzer des Geräts (100).

12. Gerät (100) nach einem der vorhergehenden Ansprüche, wobei:
- es sich bei dem ersten Fuß (203) um einen Saugfuß handelt, der eine maximale Saugkraft für das Anbringen des Geräts (100) an der Arbeitsplatte aufweist, und
- die Steuereinheit (101) so konfiguriert ist, dass sie:
- auf der Grundlage des ersten Wägesensormesssignals (303), insbesondere auf der Grundlage einer Abweichung (313) des ersten Wägesensormesssignals (303) von einem Nennwert (304), ermittelt, ob eine tatsächliche Saugkraft des ersten Fußes (203) gegenüber der maximalen Saugkraft reduziert ist, und
- die Sicherheitsmaßnahme durchführt, wenn ermittelt wird, dass die tatsächliche Saugkraft des ersten Fußes (203) gegenüber der maximalen Saugkraft reduziert ist.

13. Gerät (100) nach einem der vorhergehenden Ansprüche, wobei der erste Wägesensor (202) so angeordnet ist, dass die auf ihn einwirkende Kraft von:
- einem Gewicht des Geräts (100) und/oder
- einer Vibration, insbesondere einer Amplitude einer Vibration des Geräts (100) bei dessen Betrieb abhängig ist.

14. Verfahren (400) zum Betreiben eines Geräts (100), wobei das Gerät (100) mehrere Füße (203) für das Hinstellen des Geräts (100) auf eine Arbeitsplatte und einen ersten Wägesensor (202) an einem ersten Fuß (203) der mehreren Füße (203) umfasst, wobei das Verfahren (400) Folgendes umfasst:
- Ermitteln (401) eines ersten Wägesensormesssignals (303) des ersten Wägesensors (202) an dem ersten Fuß (203) des Geräts (100), wobei das erste Wägesensormesssignal (303) eine Abfolge von Wägesensormesswerten (301) für eine entsprechende Abfolge von Zeitpunkten (302) umfasst, wobei ein Wägesensormesswert (301) für einen Zeitpunkt (302) eine Kraft anzeigt, die zu dem Zeitpunkt (302) auf den ersten Wägesensor (202) einwirkt, und
- Analysieren (402) des ersten Wägesensormesssignals (303) und
- in Abhängigkeit von der Analyse (402) Durchführen (403) einer Sicherheitsmaßnahme, die darauf abzielt zu verhindern, dass sich das Gerät (100) über die Arbeitsplatte bewegt und/oder von der Arbeitsplatte herunterfällt, und
- Ermitteln auf der Grundlage des ersten Wägesensormesssignals (303), ob der erste Fuß (203) zumindest zeitweise keinen Kontakt mit der Arbeitsplatte hat, und
- Durchführen der Sicherheitsmaßnahme, wenn ermittelt wird, dass der erste Fuß (203) zumindest zeitweise keinen Kontakt mit der Arbeitsplatte hat.

15. Softwareprogramm, das für das Ausführen auf einem Prozessor und das Durchführen der Verfahrensschritte des Verfahrens (400) nach Anspruch 14 ausgelegt ist.

## Revendications

1. Appareil (100), dans lequel l'appareil (100) comprend,
- une pluralité de pieds (203) pour placer l'appareil (100) sur un plan de travail ;
- au moins un capteur d'échelle (202) pour au moins un parmi la pluralité de pieds (203) ; et
- une unité de commande (101) ; dans lequel l'unité de commande (101) est configurée afin
- d'établir un premier signal de mesure de capteur d'échelle (303) du premier capteur d'échelle (202) au niveau du premier pied (203) de l'appareil (100) ; dans lequel le premier signal de mesure de capteur d'échelle (303) comprend une séquence de valeurs de mesure de capteur d'échelle (301) pour une séquence correspondante d'instants de temps (302) ; dans lequel une valeur de mesure de capteur d'échelle (301) pour un instant de temps (302) est indicative d'une force agissant sur le premier capteur d'échelle (202) à l'instant de temps (302) ; et
- d'analyser le premier signal de mesure de capteur d'échelle (303) ; et
- d'exécuter, en fonction de l'analyse, une mesure de sécurité visant à empêcher l'appareil (100) de tomber du plan de travail ;
l'appareil (100) étant **caractérisé en ce que** l'unité de commande (101) est configurée afin
- d'établir, en se fondant sur le premier signal de mesure de capteur d'échelle (303), si le premier pied (203) est au moins temporairement hors contact avec le plan de travail ; et
- d'exécuter la mesure de sécurité dans l'hypothèse où il est établi que le premier pied (203) est au moins temporairement hors contact avec le plan de travail.

2. Appareil (100) selon la revendication 1, dans lequel l'unité de commande (101) est configurée afin
- d'exécuter la mesure de sécurité uniquement dans l'hypothèse où il est établi que le premier pied (203) est au moins temporairement hors contact avec le plan de travail.

3. Appareil (100) selon l'une quelconque des revendications précédentes, dans lequel l'unité de commande (101) est configurée afin
- d'établir si le premier signal de mesure de capteur d'échelle (303) est substantiellement constant à une valeur nominale (304) pour au moins une durée temporelle minimale (321) ; et
- d'établir que le premier pied (203) a glissé d'un bord du plan de travail dans l'hypothèse où il est établi que le premier signal de mesure de capteur d'échelle (303) est substantiellement constant à la valeur nominale (304) pour au moins une durée temporelle minimale (321) ; et
- en réaction à cela, exécuter la mesure de sécurité.

4. Appareil (100) selon l'une quelconque des revendications précédentes, dans lequel l'unité de commande (101) est configurée afin
- d'établir une valeur nominale (304) du premier signal de mesure de capteur d'échelle (303), en particulier fondée sur une moyenne de valeurs de mesure de capteur d'échelle (301) du premier signal de mesure de capteur d'échelle (303) ;
- de comparer la valeur nominale (304) à une valeur de référence ; dans lequel la valeur de référence dépend en particulier d'un poids de l'appareil (100) ;
- d'établir, en se fondant sur la comparaison, si le premier pied (203) a glissé d'un bord du plan de travail ; et
- d'exécuter la mesure de sécurité dans l'hypothèse où il est établi que le premier pied (203) a glissé d'un bord du plan de travail.

5. Appareil (100) selon l'une quelconque des revendications précédentes, dans lequel l'appareil (100) comprend une pluralité de capteurs d'échelle (202) pour la pluralité de pieds (203) correspondante ; et dans lequel l'unité de commande (101) est configurée afin
- d'établir une pluralité de signaux de mesure de capteur d'échelle (303) des capteurs d'échelle (202) à la pluralité de pieds (203) correspondante ; dans lequel la pluralité de signaux de mesure de capteur d'échelle (303) comprend des valeurs de mesure de capteur d'échelle (301) respectives pour la même séquence d'instants de temps (302) ; et
- d'établir, en se fondant sur la pluralité de signaux de mesure de capteur d'échelle (303), si le premier pied (203) est au moins temporairement hors contact avec le plan de travail.

6. Appareil (100) selon la revendication 5, dans lequel l'unité de commande (101) est configurée afin
- de comparer le premier signal de mesure de capteur d'échelle (303) à l'autre ou aux autres signal/signaux de mesure de capteur d'échelle (303) au départ de la pluralité de signaux de mesure de capteur d'échelle (303) ; et
- d'établir, en se fondant sur la comparaison, en particulier en se fondant sur une déviation du premier signal de mesure de capteur d'échelle (303), au départ de l'autre ou des autres signal/signaux de mesure de capteur d'échelle (303), si le premier pied (203) est au moins temporairement hors contact avec le plan de travail.

7. Appareil (100) selon l'une quelconque des revendications précédentes, dans lequel l'unité de commande (101) est configurée afin
- d'établir une déviation (313) du premier signal de mesure de capteur d'échelle (303) au départ d'une valeur nominale (304), en particulier une déviation (313) ayant une polarité correspondant à un mouvement vers le haut de l'appareil (100) par rapport au plan de travail ; et
- d'établir, en se fondant sur la déviation (313), si le premier pied (203) est au moins temporairement hors contact avec le plan de travail.

8. Appareil (100) selon l'une quelconque des revendications précédentes, dans lequel l'unité de commande (101) est configurée afin
- d'établir une divergence du premier signal de mesure de capteur d'échelle (303) par rapport à une valeur nominale (304) ; et
- d'établir, en se fondant sur la divergence, si le premier pied (203) est au moins temporairement hors contact avec le plan de travail.

9. Appareil (100) selon l'une quelconque des revendications précédentes, dans lequel
- l'appareil (100) comprend un moteur (102) configuré afin d'actionner un outil (107) à l'intérieur d'un réceptacle (104) de l'appareil (100) ; et
- l'unité de commande (101) est configurée afin
- d'établir si le moteur (102) est activé ; et
- d'exécuter la mesure de sécurité dans l'hypothèse où, en particulier uniquement dans l'hypothèse où, il est établi que le moteur (102) est activé.

10. Appareil (100) selon la revendication 9, dans lequel l'unité de commande (101) est configurée afin
- d'établir un paramètre opérationnel, en particulier une vitesse de rotation du moteur (102) et/ou un type de l'outil (107) activé par le moteur (102), de l'appareil (100) ; et
- d'analyser le premier signal de mesure de capteur d'échelle (303) en fonction du paramètre opérationnel de l'appareil (100).

11. Appareil (100) selon l'une quelconque des revendications précédentes, dans lequel la mesure de sécurité comprend
- l'arrêt du fonctionnement de l'appareil (100), en particulier d'un moteur (102) de l'appareil (100) ; et/ou
- l'émission d'un avertissement, en particulier un avertissement sonore, à destination d'un utilisateur de l'appareil (100).

12. Appareil (100) selon l'une quelconque des revendications précédentes, dans lequel
- le premier pied (203) est un pied ventouse qui présente une force de succion maximale pour fixer l'appareil (100) au plan de travail ; et
- l'unité de commande (101) est configurée afin
- d'établir, en se fondant sur le premier signal de mesure de capteur d'échelle (303), en particulier en se fondant sur une déviation (313) du premier signal de mesure de capteur d'échelle (303) au départ d'une valeur nominale (304), si une force de succion effective du premier pied (203) est réduite par rapport à la force de succion maximale ; et
- d'exécuter la mesure de sécurité dans l'hypothèse où il est établi que la force de succion effective du premier pied (203) est réduite par rapport à la force de succion maximale.

13. Appareil (100) selon l'une quelconque des revendications précédentes, dans lequel le premier capteur d'échelle (202) est disposé de sorte que la force agissant sur le premier capteur d'échelle (202) dépend
- d'un poids de l'appareil (100) ; et/ou
d'une vibration, en particulier d'une amplitude d'une vibration, de l'appareil (100) durant le fonctionnement de l'appareil (100).

14. Procédé (400) d'exploitation d'un appareil (100) ; dans lequel l'appareil (100) comprend une pluralité de pieds (203) pour le placement de l'appareil (100) sur un plan de travail ; et dans lequel l'appareil (100) comprend un premier capteur d'échelle (202) sur un premier pied (203) parmi la pluralité de pieds (203) ; dans lequel le procédé (400) comprend,
- l'établissement (401) d'un premier signal de mesure de capteur d'échelle (303) du premier capteur d'échelle (202) au niveau du premier pied (203) de l'appareil (100) ; dans lequel le premier signal de mesure de capteur d'échelle (303) comprend une séquence de valeurs de mesure de capteur d'échelle (301) pour une séquence correspondante d'instants de temps (302) ; dans lequel une valeur de mesure de capteur d'échelle (301) pour un instant de temps (302) est indicative d'une force agissant sur le premier capteur d'échelle (202) à l'instant de temps (302) ; et
- l'analyse (402) du premier signal de mesure de capteur d'échelle (303) ; et
- en fonction de l'analyse (402), l'exécution (403) d'une mesure de sécurité visant à empêcher l'appareil (100) de se déplacer sur le plan de travail et/ou de tomber du plan de travail ; et
- l'établissement, en se fondant sur le premier signal de mesure de capteur d'échelle (303), du fait de savoir si le premier pied (203) est au moins temporairement hors contact avec le plan de travail ; et
- l'exécution de la mesure de sécurité dans l'hypothèse où il est établi que le premier pied (203) est au moins temporairement hors contact avec le plan de travail.

15. Programme logiciel adapté pour la mise en oeuvre sur un processeur et afin d'exécuter les étapes de procédé du procédé (400) selon la revendication 14.
